# EUROPEAN PATENT APPLICATION

(11) **EP 1 662 384 A2**
(43) Date of publication of application: **31.05.2006**
(21) Application number: 04019839.2
(22) Date of filing: 20.08.2004
(51) Int. Cl.: G06F 9/445

(54) **Method and system for distributing and installing software**

(30) Priority: 22.09.2003 US 667688
(71) Applicant: MICROSOFT CORPORATION, Redmond, WA 98052 (US)
(72) Inventor: Delgado, Javier F., Seattle WA 98102 (US); Purushothaman, Shanmuga V., KK Nagar Chennai 600078 (IN); Nishanova, Anzhelika Y., Redmond WA 98052 (US); Hawley, Scott, Redmond WA 98052 (US); Ngyuen, Duong D., Everett WA 98203 (US); Cheng, Wen, Bellevue WA98203 (US); Bennett, James A., Duvall WA 98019 (US); Hughes, Aidan T., Bellevue WA 98007 (US)
(74) Representative: Grünecker, Kinkeldey, Stockmair & Schwanhäusser Anwaltssozietät

(57) **Abstract**

Methods and computer readable media are disclosed related to installing and distributing multiple software products. Computer code necessary to install multiple, related but distinct software products is stored on the storage media and includes at least some primary code that is necessary to all software products installable from a storage medium or set of media. Installation of a specific software product includes the installation of the primary code and at least some product-specific code. Installation is performed by an installer that identifies and installs the appropriate software product based on information, such as a product key, provided by the user. The installer may use a lookup table to identify the code to install and verify that the user is entitled to the software product.

## Description

### Technical Field

The present invention relates to the distribution, installation and operation of software on a computer and more particularly to a method and system for distributing and installing software products on different computers.

### Background of the Invention

Computer software developers typically sell multiple versions of the same software product. Each version is identifiably different from the other versions as evidenced by some differing behaviors, even though the majority of the executable computer code of the versions is the same. Examples of differing behavior include differing features, differing available resources such as language groups, presenting differing text to the user during runtime such as branding text, differing licensing terms, and differing installation behavior.

For example, software developers often provide an original equipment manufacture (OEM) version and a retail version of each software product. These versions typically have different installation behaviors. The retail version is expected to be installed by an end-user, so it includes requesting information from the user and requires response as part of the installation process. The OEM version, on the other hand, is expected to be installed by a computer reseller so it requests no information during installation, but rather at the first time the software product is executed. One difference between these two versions, therefore, is the behavior during installation. Another common difference between OEM and retail versions of the same product are the license terms that apply to each version.

Typically, each version is sold in its own packaging and on a separate storage media. The storage media includes the primary computer code, or primary code, and whatever secondary, version-specific code that is necessary to install that version and onto the receiving computer and enable the appropriate behavior. Thus, if ten different versions are sold by the software developer, not only are their ten different packagings, but also ten physically different sets of storage media each having only the version to be sold, even though the vast majority of the software, the primary code, on each set of storage media is identical.

This method of software distribution has several drawbacks. First, there is a significant potential for storage media to be packaged incorrectly. This is undesirable for many reasons. A customer may be inconvenienced by having to return the software and packaging to the point of purchase and, ultimately, the software will have to be returned to the software developer at a cost to the software developer. Also, the client may get a higher value version by accident, again at a loss to the software developer. Furthermore, if the packaging includes version-specific screen printing or physical labeling of the storage media, that storage media must be destroyed and cannot be recycled even if the software developer wished to do so.

Another drawback to this method of distribution is that the developer is required to produce a large number of different sets of storage media. Using optical discs such as compact discs (CDs) as an example, if a developer provides ten different versions of a software product, then the developer must develop ten different version-specific CDs. The development of each different CD comes at a cost and, in addition, the fact that the CDs are then only usable for a specific version also increases the cost.

### Summary of the Invention

In accordance with the present invention, the above and other problems are solved by distributing multiple versions of a software program on a single storage medium rather than using separate storage media for each version. The version actually installed on the computer may be dictated by a product key entered by a user as part of an installation process. The software developer need only develop different, version-specific packaging for media and provide the consumer with the product key appropriate for the version on the packaging.

Computer code necessary to install multiple versions of a software product is stored on the storage media and includes at least the primary code that is necessary to all the software products installable from a storage medium or set of media and the secondary code specific to each version. Installation of a specific software product includes the installation of the primary code and at least some secondary code. Installation is performed by an installer that identifies and installs the appropriate software product based on information, such as a product key, provided by the user. The installer may use a lookup table to identify the code to install and verify that the user is entitled to the software product.

In accordance with other aspects, the present invention relates to a method for installing a desired software product on a computer. The method includes receiving a command from a user to install software on the computer. Upon receipt, the computer accesses a storage medium having computer code necessary for installing a plurality of software products on the computer including the desired software product. The computer code includes a first portion, such as a primary portion or some other indispensable portion, which is used during the operation of each of the plurality of software products after installation on the computer. The computer code also includes a number of different second portions. Each second portion associated with and specific to a different one of the software products and used during the operation of only its associated software product. A product key is requested and received, the product key identifying the desired software product. The method installs the desired software product by installing the first portion of computer code and only one second portion of computer code, the second portion being the second portion of computer code associated with the desired software product.

In accordance with other aspects, the present invention relates to a method for efficiently distributing multiple, differing but related, software products such as differing versions of the same software application. The method includes storing on a storage medium all the data including files or other computer code necessary to run, install, or otherwise execute any of the multiple software products on a computer. At least one unique product key is associated with each of the multiple products. Consumers of the software products are provided with an installer that installs only one software product, the product installed being determined by the product key entered by the consumer. The installer may be included on the storage medium or already be stored on the consumers' computer. The storage medium may include multiple pieces of storage media such as multiple CDs, DVDs or other physical storage media. The product key may be provided with the storage medium or may be obtained by consumers separately such as via the Internet.

The invention may be implemented as a computer process, a computing system or as an article of manufacture such as a computer program product or computer readable media. The computer program product may be a computer storage media readable by a computer system and encoding a computer program of instructions for executing a computer process and including the computer code necessary to install multiple, related by distinct software products that share at least some primary code portion as described above. The computer program product may also be a propagated signal on a carrier readable by a computing system and encoding a computer program of instructions for executing a computer process.

These and various other features as well as advantages, which characterize the present invention, will be apparent from a reading of the following detailed description and a review of the associated drawings.

### Brief Description of the Drawings

FIG. 1 illustrates functional components of a system for installing one version of a software product according to one embodiment of the present invention.
FIG. 2 illustrates an example of a suitable computing system environment on which embodiments of the invention may be implemented.
FIG. 3 illustrates the contents of a storage medium according to one embodiment of the present invention.
FIG. 4 illustrates one embodiment of a product key in accordance with the present invention.
FIG. 5 presents one embodiment of a SKU table contained in a file that associates product identifiers with a specific software product and version of the product.
FIG. 6 presents an embodiment of a Branding Table in accordance with the present invention.
FIG. 7 presents an embodiment of a EULA Table in accordance with the present invention.
FIG. 8 presents an embodiment of a Mapping Table in accordance with the present invention.
FIG. 9 presents an embodiment of logical operations for installing software in accordance with the present invention.
FIG. 10 illustrates logical operations of an embodiment of distributing multiple related software products to consumers in accordance with a present invention.

### Detailed Description of the Invention

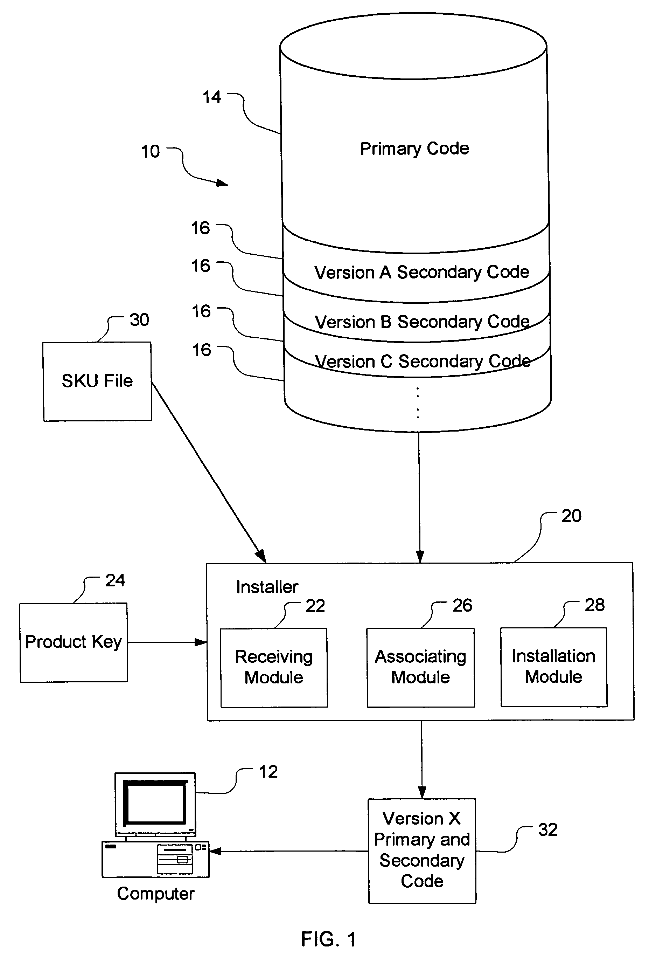

FIG. 1 shows some of the primary elements of a system for installing a version of a software product according to one embodiment of the present invention. In the embodiment shown, a computer readable data storage medium 10 is provided. The storage medium 10 may be part of an overall computer system 12, such as being stored on a hard drive (not shown) or on a removable storage medium accessible by the computer system 12. The data storage medium 10 stores computer readable code sufficient to install any of the versions of the software product onto a computer system 12. The storage medium 10 includes at least two types of computer code, primary code 14 that is common to and necessary to install each version of the software product installable from the storage media and secondary code **16** that is specific to one or more versions but not to all the versions.

It should be noted that "sufficient to install" or "necessary to install" refers to computer code, objects, data or other information that is in addition to the code already on or available to the computer. An operating system may be a necessary part of the installation process, yet it is not considered within the term "necessary to install" as described herein as the operating system is deemed already installed and available to the computer system 12.

Also shown in FIG. 1 is an installer 20. Software for the installer 20 may be included on the data storage medium 10 as additional computer code, may be previously installed on the computer 12, or may be stored remotely, thereby controlling the installation of the software product via a network connection (not shown). A receiving module 22 is provided in the installer 20 for receiving a product key 24. The product key 24 identifies the version of the software to be installed and may contain validation information that validates the product key 24. The installer 20 includes an associating module 26 that identifies code in the storage medium 10 that corresponds to the version identified by the product key 24. The associating module 26 may perform this through the use of a SKU file **30** that contains information that associates the information provided by the product key **24** with versions of the software product on the storage medium **10**.

The installer **20** also includes an installation module **28** that extracts from the storage medium **10** and installs on the computer system **12** the code **32** associated with the version identified by the product key **24** (i.e. the primary code and the secondary code specific to the version identified by the product key **24**). The installation module **28** also may enable or disable certain behaviors depending on the version installed as dictated by additional behavior information provided in the SKU file **30**.

The embodiment shown in FIG. 1 allows for the efficient distribution of related software products such as versions of a software application. Regardless of the version purchased by a customer, an identical copy of the same data storage medium may be provided. The customer, based on the product key **24** the customer is provided, may install only the version of the software product the customer is entitled. Indeed, the customer may not even be aware that more than one version can be installed from the medium. A software developer need only develop one set of storage media for the software product, rather than create and inventory a separate and distinct storage media for each version of the software product.

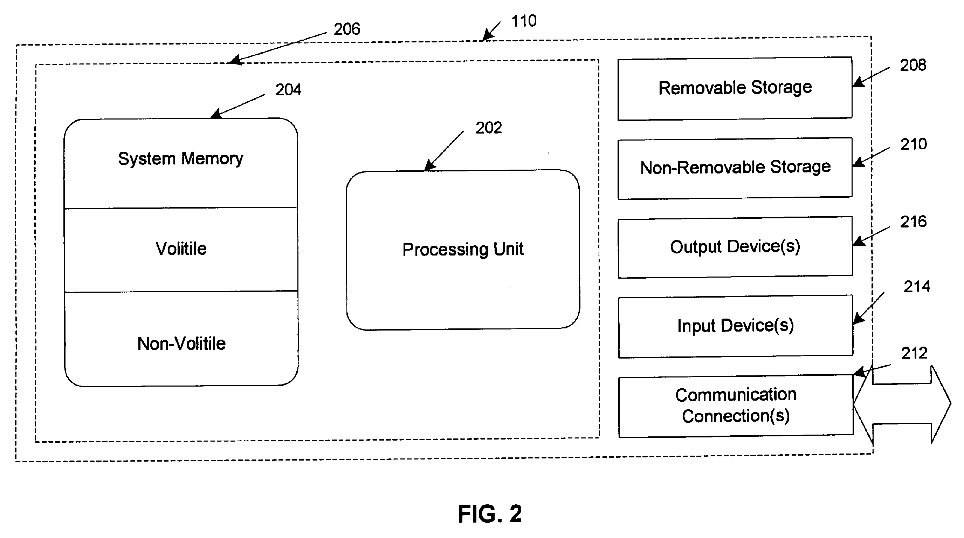

FIG. **2** illustrates an example of a suitable computing system environment on which embodiments of the invention may be implemented. This system **200** is representative of one that may be used to function as a server providing a website service. In its most basic configuration, system **200** typically includes at least one processing unit **202** and memory **204**. Depending on the exact configuration and type of computing device, memory **204** may be volatile (such as RAM), non-volatile (such as ROM, flash memory, etc.) or some combination of the two. This most basic configuration is illustrated in FIG. **2** by dashed line **206**. Additionally, system **200** may also have additional features/functionality. For example, system **200** may also include additional storage (removable and/or non-removable) including, but not limited to, magnetic or optical disks or tape. Such additional storage is illustrated in FIG. **2** by removable storage **208** and non-removable storage **210**. Computer storage media includes volatile and nonvolatile, removable and non-removable media implemented in any method or technology for storage of information such as computer readable instructions, data structures, program modules or other data. Memory **204**, removable storage **208** and non-removable storage **210** are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can accessed by system **200**. Any such computer storage media may be part of system **200**.

System **200** may also contain communications connection(s) **212** that allow the system to communicate with other devices. Communications connection(s) **212** is an example of communication media. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, **RF**, infrared and other wireless media. The term computer readable media as used herein includes both storage media and communication media.

System **200** may also have input device(s) **214** such as keyboard, mouse, pen, voice input device, touch input device, etc. Output device(s) **216** such as a display, speakers, printer, etc. may also be included. All these devices are well know in the art and need not be discussed at length here.

A computing device, such as system **200**, typically includes at least some form of computer-readable media. Computer readable media can be any available media that can be accessed by the system **200**. By way of example, and not limitation, computer-readable media might comprise computer storage media and communication media.

Embodiments of the present invention can be considered to include several components that work together to achieve the stated function. One component is the storage media. Another is the product key that identifies the product to be installed. A third is the means by which the product key is associated with the product to be installed. And a fourth component is the installer that receives the product key, identifies the associated product, accesses the storage media and installs the associated computer code for the product and enables or disables the appropriate behaviors. Each of these shall be discussed below in turn.

For the balance of this discussion, the more common term "version" shall be used to indicate one of a set of related software products; related in the sense that they share some primary code. One skilled in the art, however, will realize that even though the specific examples of differing versions shall be discussed, the embodiments disclosed herein are equally applicable to any software products, whether called different versions, different releases, or by other names, that have in common at least some portion of computer readable code.

### Storage Media

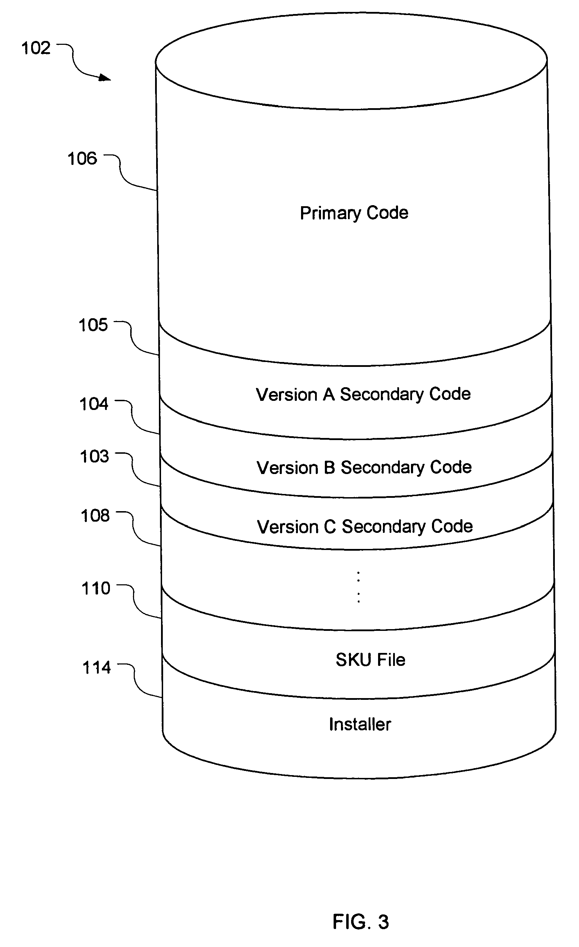

**FIG. 3** illustrates the contents of a storage medium **102** according to one embodiment of the present invention. In the embodiment shown, a computer readable data storage medium **102** is provided. The medium **102** may be of any type readable by a computer, including but not limited to removable optical data storage discs such as CDs or DVDs, floppy magnetic discs such as microdiscs, hard drives, or RAM.

The data storage medium **102** stores computer readable code sufficient to install any of a number of different versions of a software product onto a computer. The code stored on the data storage medium **102** can be divided into at least two portions: a primary code portion **106** that is necessary for each version; and multiple version-specific, or secondary, portions **103**, **104**, **105**, and **108** of code, each of which is associated with at least one version. For example, as shown in FIG. **3**, in order to install a specific version A of the software product, the primary portion **106** and the secondary portion **105** specific to version A must be installed.

When used in this context, "version-specific portion" and "secondary portion" refer to that portion of code necessary for installation of a version that is not the primary portion **106** shared between all the versions of the software product. It should be noted that version-specific portions **103**, **104**, **105**, and **108**, while different for each version, need not be exclusive and could include some or all of the version-specific portions **103**, **104**, **105**, and **108** of other versions. For example, the version-specific portion **104** specific to version B might include some or all of the version-specific portion **108** of another version.

Also shown in FIG. 3 is an installer **114** provided on the storage medium **102**. The installer **114** determines which version of the software product to install and, subsequently, installs the primary portion **106** and the appropriate version-specific portion or portions **103**, **104**, **105**, or **108**.

Note that alternative embodiments of providing the installer to consumers of software products are also possible. For example, the installer **114** may be provided on a separate storage medium, possibly with a product key. The installer **114** may be previously installed on the computer or may be stored remotely, thereby controlling the installation of the software product via a network connection.

In order to determine what code must be installed, the installer **114** must determine what code is associated with the various versions capable of installation from the medium **102.** In the embodiment shown, the installer **114** uses an associating SKU file **110**, although other embodiments are possible such as providing associating information within the installer **114**. The SKU file **110** is provided on the storage medium **102** and includes information that associates different version identifiers with the appropriate version-specific portions **103**, **104**, **105**, and **108**. The version identifiers are provided, for example in the form of a product key **24**, by the software consumer at some point during the installation of a version.

In the discussion above, it is important to note that the SKU file **110** may itself include some or all version-specific code **103**, **104**, **105**, or **108**. For example, embodiments of the SKU file **110** may include specific instructions concerning how to install the various versions, what behaviors should be enabled for each version, etc. Additionally, in some alternative embodiments the SKU file **110** may be installed with every version of the software product for use during runtime as a repository of its version specific code **103**, **104**, **105**, or **108**.

In the embodiment shown, the primary code **106** and secondary code **103, 104**, **105** and **108** may be provided as discrete and separate files. In an alternative embodiment, such as embodiments of the SKU file **110** described above, some secondary code **103**, **104**, **105** and **108** may reside in what could be considered a primary code **106** file. One example is a single file such as a lookup table included on the data storage medium **102** that contains discrete data specific to one or more of the software products. Upon installation of a given version of the software product, the installer would access the lookup table and extract the secondary code contained in the table specific to the version, copying only the necessary version-specific code to the computer. Even though the lookup table itself may be a primary file in that it is used during installation and contains data necessary to every software product, only version-specific data elements and code are actually installed.

Yet another embodiment is to provide all the secondary code **103**, **104**, **105** and **108** in a single file, such as a SKU file **110**, that is installed along with the primary code **106**. In that embodiment, the version installed is still determined by the product identifier, even though all of the code necessary for any of the versions has been copied to the computer during the installation. In this embodiment, the installer installs all the code, but enables only the set of behaviors specific to the version.

One embodiment of storage media described above would be a CD-ROM disc or set of discs that include all the software necessary to install multiple different versions of a software product. Taking a word processor application such as Microsoft® Word® as an example, the storage media would include all the software necessary to install the retail and original equipment manufacturer (OEM) versions of a professional version, a home version, a student and teacher edition, and foreign language editions of the word processor application. In addition to retail and OEM versions, the storage media may contain Word editions for any of the different operating systems (Windows®, Apple®, Unix, etc.) for which the storage media is accessible.

### Product Key

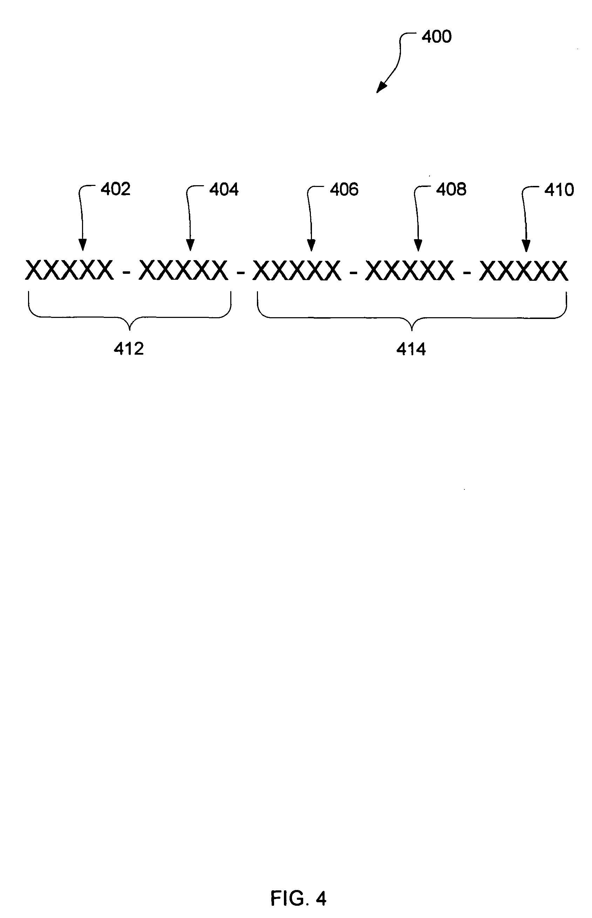

**FIG. 4** illustrates one embodiment of a product key **400** in accordance with the present invention. The product key **400** is in the form of five sets **402, 404, 406, 408** and **410** of five alphanumeric characters, each set separated by a hyphen. The first two sets **402** and **404** of characters together form a product identifier **412**, sometimes referred to as the payload. The last three sets **406**, **408** and **410** of characters form a digital signature **414**.

The digital signature 414 is provided to verify that the product is a valid product key and has been issued from the software developer. Preferably, the installer will verify the signature with additional information provided either with the installer, the storage media or provided from a server attached via a network connection.

The product identifier **412** represents the data that the product key **400** provides to the installer in order for the installer to understand which version should be installed. Embodiments of the product identifier **412** may include various information as necessary to identify the product. In one embodiment, the product identifier **412** includes a Group ID that identifies the software product or product family and a Channel ID that identifies a specific version of the software product. For example, Group ID of 5 may be a wordprocessor product, and a Channel ID of 777 that may identify a retail, home version of the product. In addition, product identifiers may also contain a serial number.

### Association of the Product Key with a Specific Product

One skilled in the art will immediately recognize that there are many ways of associating a product identifier with specific contents of storage media. The discussion below presents one embodiment of a single computer-readable file, such as a SKU file **110**, that is provided to associate a product identifier, such as one **412** provided in a product key **400** as described above, with the appropriate contents of storage media. In addition, the file may also dictate or identify the installation and runtime behaviors of each version that should be enabled or disabled during installation and operation of that version. In the embodiment, the file is an XML file accessible by the installer. The discussion should not be considered to limit the scope of the invention to this particular embodiment as many other embodiments that associate a product identifier with certain contents and behaviors are possible.

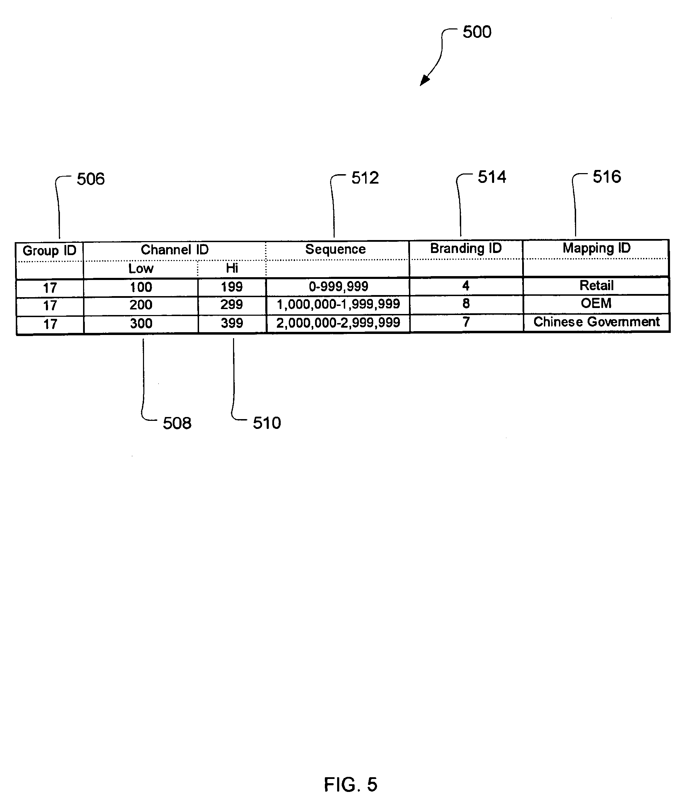

FIG. **5** presents one embodiment of a table **500** contained in the SKU file 110 that associates product identifiers **412** in the embodiment described above with a specific software product and version of the product.

The table **500** shown in FIG. **5** is referred to as the SKU table **500**. In the embodiment shown, a column of Group IDs **506** is provided wherein each Group ID indicates a specific product. Channel IDs are contained in the lookup table **500** as two columns that identify a range: a column **508** containing the low end of the range and a column **510** for the high end of the range. Next is a column **512** that contains the sequence number of serial numbers that are valid for the range indicated by the Channel ID columns **508, 510.**

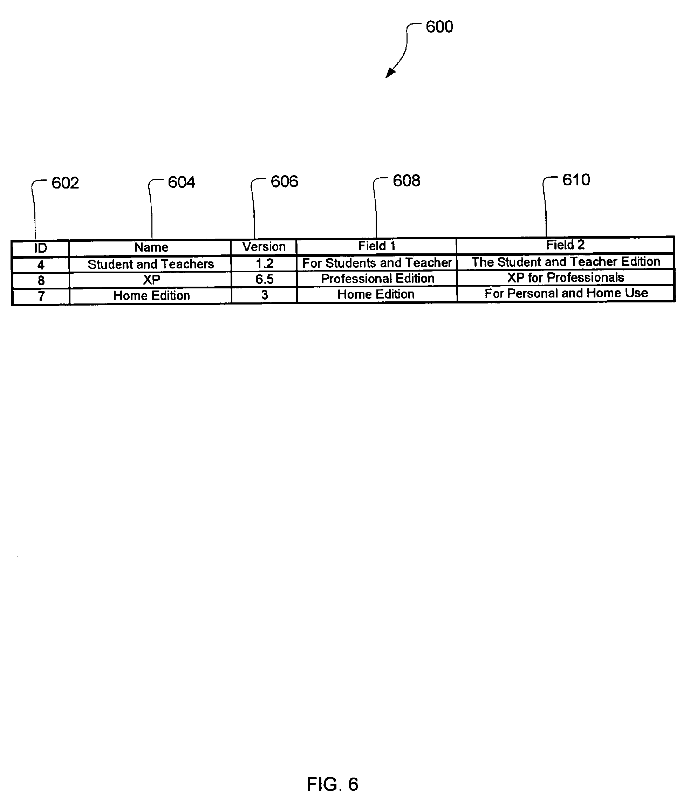

Yet another column **514**, referred to as the branding column **514**, contains a brand ID that identifies information specific to how the version of the product is to be presented to the user. This will be discussed in greater detail with respect to the branding table in FIG. **6**.

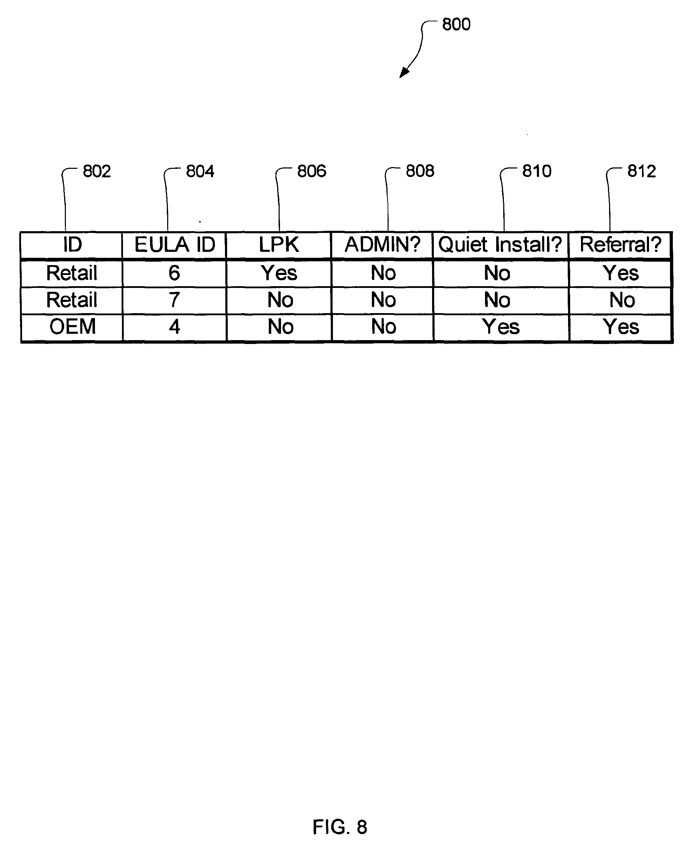

The last column **516** shown is an indicator of whether the product is a retail or OEM product. This column is referred to as the mapping column **516** and it contains mapping identifiers specific to each product version. In some embodiments, information in the mapping column can be used with the Mapping Table shown in FIG. **8** to identify the proper End-User License Agreement (EULA) of the product.

The mapping identifiers, in addition to possibly being used to identify EULAs as discussed below, also may dictate enablement of specific functions of the software installed on the computer. For example, OEM products typically do not request and prompt the user for a product key when installed. Rather, OEM products prompt for this information upon the first execution of the product (typically after the computer has been sold to the end user). Retail products, on the other hand, typically require the product key as part of the installation process. Additional embodiments of a table 500 or similar structures for associating a product identifier with a version or a set of behaviors that constitute a distinct version will be immediately suggested to one skilled in the art. The embodiment provided in FIG 5 is provided as an example only and should not be considered as limiting the scope of the present invention.

FIG. **6** presents an embodiment of a Branding Table 600. The branding table includes information concerning what text and GUIs should be displayed during execution of the product and installation. For example, a "Student and Teacher Edition" of a word processor may identify in the branding table that the phrase "Student and Teacher Edition" should appear in the title bar of the product when in use, or when initially executed or in the product specific information pages, such as those found via the "Help/About" pulldown menu in some products.

In the embodiment of the Branding Table **600** shown in FIG. **6,** unencoded text is provided for use in GUIs shown to the user during installation or runtime. A first ID column **602** is provided that includes a branding ID for each branded version. A name column **604** is provided that includes an unencoded name for the brand identified by the branding ID. A version column **606** is provided that identifies the version of the branding. In the embodiment shown in FIG. **6**, the table **600** also includes two field columns **608** and **610** that include unencoded text for use in different fields contained in the GUIs and screens that are presented to the user either during installation or runtime. Additional embodiments of a Branding Table **600** or similar structures for including and providing the branding information will be immediately suggested to one skilled in the art. The embodiment provided in FIG **6** is provided as an example only and should not be considered as limiting the scope of the present invention.

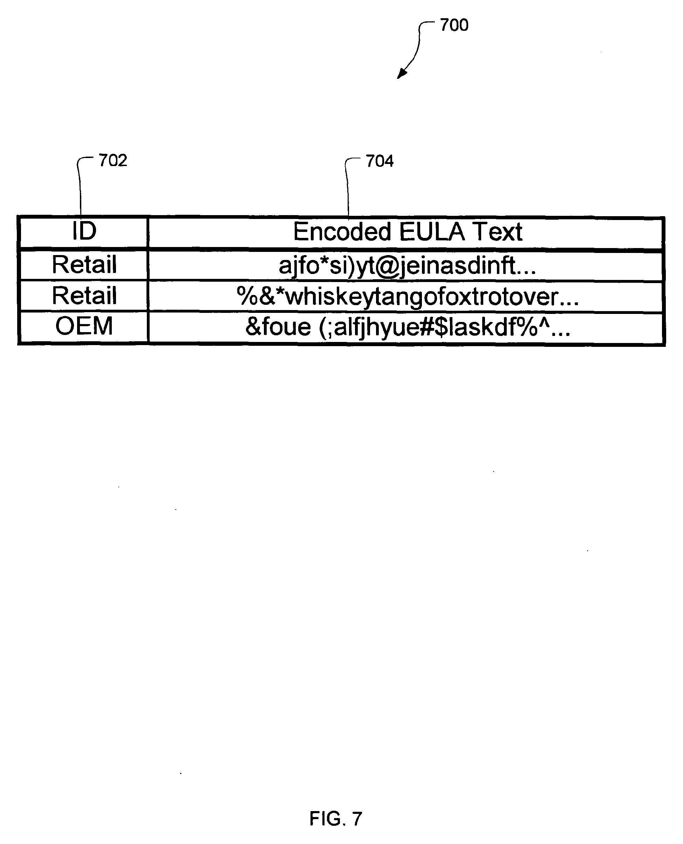

FIG. 7 presents an embodiment of another table contained in a file, such as a SKU file 110, for storing EULAS. In the embodiment shown in FIG. **5**, each version is associated with a specific End-User License Agreement (EULA). Typically, different and distinct EULAs apply to various versions of a software product. Embodiments of the SKU file **110** may contain a table **700** that contains the EULAs for and associates each EULA with the various versions that may be installed. The EULA Table **700** is a simple two-column table having a EULA identifier in one column **702** and containing a base 64 encoded EULAs in the other column **704.** The installer obtains the appropriate EULA identifier by consulting one or more of the other tables **500, 600** and **800** in the file. Then using the EULA Table **700,** extracts and decodes the appropriate EULA for storage in a decoded form on the computer during installation. Additional embodiments of a EULA table **700** or similar structures for identifying and providing EULAs specific to various versions of software products will be immediately suggested to one skilled in the art. The embodiment provided in FIG 7 is provided as an example only and should not be considered as limiting the scope of the present invention.

FIG. **8** presents another table **800**, a Mapping Table **800**, that may be found in a SKU file **110.** In the embodiment shown, the Mapping Table **800** identifies certain behaviors of the various versions of the software products listed on the table **800** and, presumably, stored on the storage media. The Mapping Table **800** includes one column **802** for the mapping identifier and a second column **804** for the EULA ID associated with each mapping identifier. In addition, the Mapping Table 800 includes additional columns that identify other behaviors.

A "LPK" column **806** is provided that identifies whether the version of the software product is enabled for an extended set of languages, known as a language pack, that may be installed separately. The "LPK" property, if set to "Yes", allows a language pack to be installed at a later time if the user desires. If set to "No" it blocks installation of the language pack. If installed and enabled, then the user would have access to these additional languages and features.

A "ADMIN?" column **808** is included that identifies whether the user is enabled to do an administrator installation and customize the configuration of the software product during installation. The "ADMIN" property, if set to "Yes", allows the user to do an admin install to customize the installation if desired. If set to "No" this functionality is blocked.

A "Quiet Install?" column **810** identifies whether a quiet installation, i.e. an installation where screens are not presented to the user during installation, is enabled. If a quiet installation is done, the product key may be passed via an alternate method, such as via the command line, otherwise the installation may fail. Note that in this situation, the storage medium **102** may be the hard drive of the computer as the software is already provided.

A "Referral?" column **812** is also provided. "Referral?" is the only property here that has immediate action and will display a referral code if set to "Yes", or hide it if set to ''No.'' No user decision is required.

An alternative embodiment of the Mapping Table **800** may be another simple two-column table that associates the identifiers found in the mapping column **516** of the SKU table **500** with a EULA ID. The mapping table includes one column **802** for the mapping identifier and a second column **804** for the EULA ID associated with each mapping identifier. Additional embodiments of a Mapping Table **800** or similar structures for identifying the behaviors included in a version will be immediately suggested to one skilled in the art. The embodiment provided in FIG **8** is provided as an example only and should not be considered as limiting the scope of the present invention.

In embodiments of the present invention the SKU file **110** may copied in its entirety onto the computer as part of the installation process. In other embodiments, it is consulted and only selected portions of the contents of the file (such as the EULA, any branding information, etc.) are copied onto the computer during installation. One skilled in the art will recognize that many different ways of providing a file that associates the product identifier with specific branding, mapping, and EULA behaviors are possible and that the above is but one example. In addition, one skilled in the art will recognize that, in addition to providing a file such as the SKU file described above, there are many analogous and functionally equivalent ways to perform and support the same functions performed and supported by the SKU file.

### Installer

An installer **114** in accordance with embodiments of the present invention is a computer executable program or object that can receive a product identifier such as the product identifier **412** in the product key **400**, identify the version, and install the appropriate computer code from the storage media and enable the appropriate features thereby installing the version associated with the product identifier. In one embodiment, the installer **114** may be provided as additional computer code, such as in the executable file SETUP.EXE, on the storage media storing the computer code for the product and its versions. The installer **114** may be automatically launched via the action of a second file named AUTORUN.INF upon the insertion of the media into a reading device such as a disc drive. In another embodiment, the installer **114** is a utility that already exists on the computer or that is accessible via a network from a remote server.

In some embodiments, upon entry of valid product identifier the installer **114** uses the information in the SKU file **110** to determine what version of the software product to install. Based on the information in the SKU table 500 and additional information obtained from the other tables **600, 700,** and **800** in the file, the installer **114** installs the appropriate code from the storage medium **102** and enables the appropriate behaviors for the version identified. In an alternative embodiment, the installer **114** copies the SKU file **110**, the primary code **106**, the appropriate version-specific code for the version (in addition to that included in the SKU file **110**, if any) to the computer and then updates a registry on the computer based on the version being installed.

Each version of a product installed has different behavior in at least one respect, and usually more. For example, additional language packs (set of foreign languages that the GUI may use) may be enabled and provided in an international corporate version. Specific branding, such as the student version discussed above, may be included that changes parts of the GUI. Different EULAs likely will apply to each version. Different versions may include different types or numbers of functions such as spell checking, font control, etc. Also discussed above is different behavior during the installation, such as that described for OEM and retail products. One skilled in the art will recognize that behavior is used herein broadly to indicate any difference between the installation or operation of versions of software products.

In the embodiment of a SKU file **110** discussed in reference to FIGS. **5-8**, upon entry of valid product identifier the installer **114** uses the information in the SKU table **500** to determine what version of the software product to install. Based on the information in the SKU table **500** and additional information obtained from the other tables **600**, **700**, and **800** in the file, the installer **114** installs the appropriate code from the storage medium **102** and enables the appropriate behaviors for the version identified.

In an alternative embodiment in which the SKU file **110** is copied in its entirety onto the computer, some behaviors of the installed version may be enabled or disabled based on information contained in the SKU file **110**. The installer **114**, in this case, copies the SKU file **110** but also updates the registry to consult the SKU file. Upon execution of the version, the SKU file **110** may be consulted and information may be extracted, for example from the branding table 600 based on the version.

The logical operations of the various embodiments of the present invention are implemented (1) as a sequence of computer implemented acts or program modules running on a computing system and/or (2) as interconnected machine logic circuits or circuit modules within the computing system. The implementation is a matter of choice dependent on the performance requirements of the computing system implementing the invention. Accordingly, the logical operations making up the embodiments of the present invention described herein are referred to variously as operations, structural devices, acts or modules. It will be recognized by one skilled in the art that these operations, structural devices, acts and modules may be implemented in software, in firmware, in special purpose digital logic, and any combination thereof without deviating from the spirit and scope of the present invention as recited within the claims attached hereto.

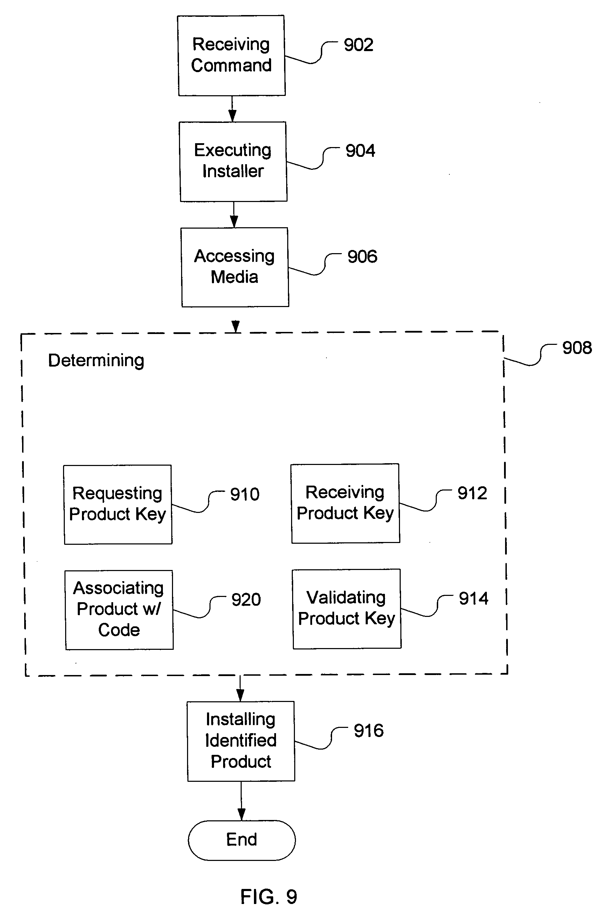

FIG. 9 presents an embodiment **900** of logical operations for installing software in accordance with the present invention. In receiving operation **902**, a user command is received directing a computer to install software. The command received may take the form of a user inserting storage media, such as a CD, into a media reading device in the computer. In response to the inserting of new storage media, the computer may automatically execute a file, such as the AUTORUN.INF that is common on CDs, resulting in a query to the user to install software stored on the storage media. In an alternative embodiment, the command may be a user selection of an "install software" icon displayed on a display connected to the computer. The command may be received by the computer for software to be installed on or may be received by a remote server via a network connection.

The embodiment also includes an executing operation **904** that executes an installer. The executing operation **904** may occur at any time relative to the other operations. For example, when inserting storage media such as a CD as described above, the media is accessed (see discussion of the accessing operation **906** below) and the AUTORUN.INF may execute an installer, such as one contained in a SETUP.EXE file, prior to receiving a user command in the receiving operation **902**.

The executing operation **904** identifies and executes an installer. The installer may be stored on the storage media with the computer code to be installed. Alternatively, the installer may be on the computer or on a server connected to the computer via a network. Regardless of the location of the installer, it is operable to install software from the storage media as described above with reference to the installer discussion.

An accessing operation **906** locates and accesses the storage media containing the software to be installed. In one embodiment, the accessing operation **906** includes accessing files and computer code on storage media that was inserted or otherwise connected directly to the computer. In another embodiment, the installer identifies the storage media from a selection of storage media available over a network connect. In yet another embodiment, storage media both directly connected to the user and separate storage media available over a network are accessed. This is useful if there have been minor version changes or some additional information is required that was not stored on the insertable storage media.

In any event, the storage media accessed in the accessing operation **906** includes the computer code necessary for installing any of a selection of related software products. Example of such products include software applications that have multiple versions or versions, software products that use the same primary software. Thus, the storage media includes some first portion of computer code that will be installed regardless of which software is ultimately installed and multiple second portions of computer code, each associated with one piece of software.

A determining operation **908** identifies the software to be installed and verifies that the user is entitled to install that software. A simple embodiment of the determining operation is a selection by the user that identifies one of the available software on the storage media. More secure embodiments may include receiving some form of information from the user that verifies the user's entitlement to the software identified. This may include entering a product key, product identifier, or some other code, such as from a receipt generated by a remote server. In addition, the determining operation **908** may include interaction with a second computer, such as a verification server connected via a network.

One embodiment of the determining operation **908** includes several sub-operations. One is a requesting operation **910** that prompts the user for entitlement or identification information. An example of a requesting operation **910** is a request for a product key, such as the product key **400** described above, that both identifies a specific version of software and includes verification information for validating the product key. For example, a user may be required to input a product key into a field provided for that purpose. The requested information may be included with the packaging for the storage media. For example, a product key may be provided on a protective case for the storage media. Alternatively, the product key may be provided with the receipt or via a network from a product key server.

A second sub-operation is a second receiving operation **912** in which the requested information is received. The received information may be in the form of a product key as described above. In addition, the received information may be encoded such that only a specific installer may be able to access and decrypt the information.

A third sub-operation is a validating operation **914** that validates the information received in the second receiving operation **912**. The validating operation **914** verifies that the information received proves that the user is entitled to the software the user had identified. The validating operation **914**, may include decrypting the received information, such as a product key entered by the user and received in the second receiving operation **912**, and subsequently extracting identifying and verifying information from the decrypted information.

The determining operation **908** may also include an associating operation **920**. In the associating operation **920**, the code (particularly the secondary, version-specific code) associated with the software to be installed is identified. Embodiments of the associating operation 920 may require the use of a lookup table, such as the SKU table **500** and/or a file such as the SKU file **110,** to associate the identified software with its constituent code. The lookup table and/or file may be stored on the storage media containing the software to be installed. Alternatively, the lookup table may be provided to the user already and stored on the computer, or may be located at a remote server connected to the computer via a network.

If the user is entitled to software, an installing operation **916** then installs the software on the computer. The installing operation **916** may include copying the associated computer code to the computer's internal storage device or devices as necessary to install the software. For example, the first portion of computer code required by all software and the second portion associated with the identified software are copied. In embodiments, the lookup table and/or SKU file may also be copied. The table may be necessary to identify various behaviors during the operation of the software after installation as well as being necessary to identify the associated code during the installation.

The installing operation may also include updating a registry of installed software on the computer. Specific data or information may be copied into the registry that includes or identifies information copied from the storage media onto the computer. This data written to the registry may enable or disable behavior of the software installed as appropriate for the software identified by the product identifier.

It should be noted that throughout the operations described above, the user may not be aware that there is more than one distinct software product available to be installed. The receiving operation **902**, therefore, may be interpreted as receiving a general command to install software, rather than a specific command to install a specific software product. In that case, the prompts to the user are general prompts that may only refer to the software in general terms that could be considered descriptive of all the software on the storage media. Thus, when the user enters a product key or other entitlement information, the user may not know that the product both identifies the software to be installed and to which the user is entitled, as well as providing the information necessary to verify the entitlement. However, upon the validation of the user's entitlement, the installing operation **916** and any other subsequent operations need no longer be general and may present to the user information and screens having branding text unique to the identified software product.

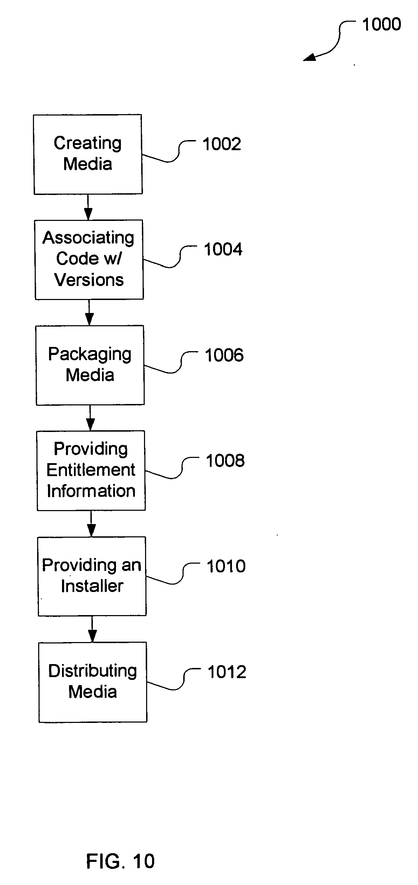

FIG. **10** illustrates logical operations **1000** of an embodiment of distributing a software product having multiple versions to consumers in accordance with a present invention. In reference to FIG. 10, each version will be referred to a separate and distinct, albeit related, software product. In the embodiment shown, the distribution begins with a creating operation **1002** in which multiple identical or substantially identical copies of storage media are created, manufactured or otherwise provided. By substantially identical, it is realized that each storage medium may include some specific identifying information such as a serial number or other medium specific information. However, at least with regard to the software products stored thereon, the storage media contains identically copies.

An associating operation **1004**, possibly as part of the creating operation **1002**, associates each software product on the storage media with the common portion of computer code that is required by all the software products and with a second portion of code that is required for that software product. For example, a specific EULA for a software product will be included in the second portion of computer code associated with that software product.

The associating operation **1004** may include creating a lookup table or set of tables, such as in the SKU file. The tables may be stored on the storage media or provided to the user as part of an entitlement operation **1008** (discussed below) that allows the user to install a software product from the storage media.

A packaging operation **1006** may be included as shown. The packaging operation **1006** may package the storage media into packaging for transport and sale to customers. In addition, the packaging operation **1006** may include packaging some of the storage media into different packaging, each identifying some subset of the software products actually stored on the media. For example, even though multiple versions of a software application may be included on the storage media, only one may be identified, such as professional edition or a home edition.

In order for the customer to install the software distributed in accordance with the present invention, they must be provided with entitlement information, such as a product key identifying and entitling the customer to a specific version contained on the storage media, that allows them to access and install a software product. A providing entitlement information operation **1008** is shown. The providing entitlement information operation **1008** provides to customers a product key or other information that is necessary to install a software product from the storage media. Many different ways of providing this information have been discussed above and many more will immediately be suggested to one in the art. For example, the entitlement information may be provided with the packaging. In cases where the packaging identifies only a single software product, the entitlement information provided will identify and entitle the customer to install only the software product identified on the packaging. In this case, the entitlement information could be considered a part of the packaging of the storage media. Other methods are also contemplated such as providing the entitlement information as part of a receipt or online purchase process. In the latter case, a customer with distributed storage media could install any of the software products on the storage media simply by purchasing or otherwise obtaining a valid product key to a desired software product.

In addition to entitlement information, a providing an installer operation **1010** provides a customer with an installer capable of verifying the entitlement information, identifying the entitled software product and its associated second portion of computer code, and installing the first portion and the identified second portion. The installer may be provided in a number of different ways depending on the embodiment. For example, the installer may be provided by including it on the storage media. Therefore, if the customer has the storage media then the installer will automatically be provided as well. The installer may also be provided to the customer as part of the providing entitlement information operation **1008**. For example, a customer with distributed storage media could obtain an installer along with the valid product key to the desired software product. As installers are small programs, this may be an efficient method of preventing piracy when freely distributing storage media. The installers could be valid for only one use or on only one computer, preventing people with access to the storage media from obtaining an installer from a purchasing customer.

The providing an installer operation **1010** may also include providing a lookup table or tables that identifies each software product by their installation and runtime behaviors. Examples of lookup tables are those discussed in reference to FIGS. **5-8**. The lookup tables may be generated as part of the associating operation **1004** and stored on the storage media in the creating operation **1002**. The lookup table may include information that identifies the installation and runtime behaviors of each software product, may identify a EULA for each product or may identify specific user interfaces for each software product. Some or all of the lookup tables may be considered part of the common first portion of computer code that must be copied or otherwise installed, or the lookup tables may be considered part of the installer in the event that no data from the tables need be copied to the computer during installation. Lastly, some portion of the tables may be common to all software products while other portions are specific to some subset of software products contained on the storage media.

The storage media created in the creating operation **1002** are distributed to customers in a distributing operation **1012**. The distributing may be accomplished in any number of ways. The storage media could be provided in cereal boxes or as coasters in bars as promotional items. They could be distributed to retail outlets for sale to end users in a traditional manner. They could be distributed by providing customers access to the storage media via a network connection. They could be distributed as original equipment with computers bought from computer suppliers. They could be distributed for free through the mail. In some of the above-listed embodiments of a distributing operation **1012** (for example, through purchase at a retail outlet of the storage media or a computer) the customer may also be provided with entitlement information and an installer. If distributed for free, for example as part of a promotion, the customer may have to obtain one or both of the entitlement information and the installer, separately.

Embodiments of the present invention are advantageous to the consumer as well as the software developer. For one thing, the situation where the storage media does not include the version described on the packaging may be prevented. As long as the storage media is for the correct software product, all versions are provided. In addition, in previous version-specific distribution methods, if the storage medium distributed to the consumer failed, the consumer could not reinstall the version even though he was entitled to. In the embodiments shown above, as long as the installer is capable of determining which version the consumer is entitled, then the consumer may install or reinstall the purchased version from any of the storage media for that software product.

Although the invention has been described in language specific to computer structural features, methodological acts and by computer readable media, it is to be understood that the invention defined in the appended claims is not necessarily limited to the specific structures, acts or media described. As an example, the computer code for the product and its versions may be included in storage media that is accessible to the computer via a network such as the Internet rather than on media that is distributed. Therefore, the specific structural features, acts and mediums are disclosed as exemplary embodiments implementing the claimed invention.

The various embodiments described above are provided by way of illustration only and should not be construed to limit the invention. Those skilled in the art will readily recognize various modifications and changes that may be made to the present invention without following the example embodiments and applications illustrated and described herein, and without departing from the true spirit and scope of the present invention, which is set forth in the following claims.

## Claims

1. A method for installing a first software product on a computing device comprising:
receiving a command from a user to install software on the computing device; accessing a storage medium having computer code necessary for installing a plurality of software products on the computer including the first software product, the computer code including a first portion that is used during the operation of each of the plurality of software products after installation on the computer and a plurality of different second portions, each second portion associated with a different one of the plurality of software products and used during the operation of only its associated different one of the plurality of software products;
determining that the user is entitled to install the first software product; and
installing on the computing device at least the first portion of computer code and only one second portion of computer code, that second portion being the second portion of computer code associated with the first software product.

2. The method of claim 1, wherein each of the plurality of software products is a distinct version of a software application, each version having distinct runtime behaviors, or a distinct installation, or both.

3. The method of claim 1 wherein receiving comprises:
receiving a command to execute an installer stored on the storage medium; and
executing the installer.

4. The method of claim 1 wherein receiving comprises:
receiving a command to execute an installer previously stored on the computing device; and
executing the installer.

5. The method of claim 1 wherein receiving comprises:
receiving at a remote server via a network connection a command to execute an installer on the remote server to install software on the computing device; and
executing the installer.

6. The method of claim 1, wherein determining further comprises:
requesting entitlement information from the user indicative of whether the user is entitled to install a software product;
receiving the entitlement information; and
validating the entitlement information.

7. The method of claim 1 further comprising:
providing at least one lookup table in a file on the storage medium, the look up table associating each software product with information contained in packaging of the software product.

8. The method of claim 1, wherein installing further comprises:
copying only that computer code necessary to install the first software product from the storage medium to the computer.

9. The method of claim 1, wherein installing further comprises:
writing data to a registry maintained on the computing device, the data specific to the first software product.

10. A method for installing a first version of a software application on a computer comprising:
receiving a command from a user to install software on the computer; accessing at least one data storage disc having computer code necessary for installing a plurality of versions of the software application on the computer including the first version, the computer code including a primary portion that is used during the operation of each of the plurality of versions after installation on the computer and a plurality of different version-specific portions, each version-specific portion associated with a different version of the software application and used during the operation of only its associated different version;
requesting a product key;
receiving the product key, the product key identifying the first version; and
installing the primary portion of computer code and only the version-specific portion of computer code associated with the first version.

11. The method of claim 10, wherein the at least one data storage disc includes a plurality of data storage discs and wherein accessing further comprises:
accessing at least two of the plurality of data storage discs.

12. The method of claim 10, wherein each version is distinct from the other versions and has distinct runtime behaviors, distinct installation behaviors, or both.

13. The method of claim 10 wherein receiving comprises:
receiving a command to execute an installer stored on the at least one data storage disc; and
executing the installer.

14. The method of claim 10, wherein installing comprises:
after input of the product key;
decrypting the product key; and
extracting information from the decrypted product key that identifies the first version.

15. The method of claim 10 further comprising:
providing at least one lookup table in a file on the at least one data storage disc, the look up table identifying each product key with one of the plurality of versions on the at least one data storage disc.

16. The method of claim 10, wherein installing comprises:
validating a digital signature contained in the product key; and
installing the first version only if the digital signature can be validated.

17. The method of claim 10, wherein installing comprises:
copying only the computer code necessary to install the first version from the at least one storage medium to the computer.

18. The method of claim 10, wherein installing comprises:
writing data to a registry maintained on the computer, the data specific to the first version.

19. A method of distributing a plurality of software products to consumers comprising:
storing, on a plurality of storage media, identical copies of computer code, each copy including computer code required to install and execute any of the plurality of software products including the first software product and wherein a common portion of the computer code is necessary to execute all of the plurality of software products after installation;
providing consumers access to an installer that, upon receipt of entitlement information, will install the common portion of the computer code and a second portion of computer code associated only with that version of the software application identified by the entitlement information; and
distributing at least one of the plurality of storage media to each consumer.

20. The method of claim 19 wherein providing comprises:
providing consumers access to an installer by storing the installer on each of the plurality of storage media.

21. The method of claim 19 wherein each software product has distinct runtime behaviors and distinct installation characteristics.

22. The method of claim 19 further comprising:
providing a first consumer with entitlement information associated with a first software product;

23. The method of claim 19 further comprising:
packaging at least some of the storage media in packaging material having markings that indicate that the storage media in the packaging material contains only a first software product; and
providing a different first product key with the packaging material of each of the at least some storage media, each first product key associated with the first software product indicated on the packaging.

24. The method of claim 19, wherein providing comprises:
providing access to the installer via a network connection, the installer stored on a remote server.

25. The method of claim 21, wherein providing comprises:
providing a lookup table that identifies each software product as a distinct set of installation and runtime behaviors and identifies each software product with entitlement information.

26. The method of claim 25, wherein the lookup table identifies a distinct user interface to be displayed by each software product during runtime.

27. The method of claim 25, wherein the lookup table identifies distinct end user license agreements that include the rights of the end user of each software product.

28. The method of claim 25, wherein the lookup table identifies distinct installation procedures to be followed during installation of each software product.

29. The method of claim 19, wherein the plurality of storage media are part of the consumers' computing devices and distributing comprises:
transmitting identical copies of computer code necessary to install any of the plurality of software products to each consumer over a network for storage on the consumers' storage media.

30. A method of distributing a plurality of versions of a software application to consumers comprising:
associating at least one distinct product key with each version of the software application;
creating a plurality of storage media, each including identical copies of computer code, each copy including computer code required to install any of the plurality of versions of the software application including the first version and wherein a common portion of the computer code is necessary to install all of the plurality of versions;
providing an installer that, upon receipt of the product key, will install the common portion of the computer code and a second portion of computer code associated only with that version of the software application associated with the product key; and
distributing at least one of the plurality of storage media to each consumer.

31. The method of claim 30 wherein the storage media comprises a plurality of sets of one or more storage discs.

32. The method of claim 30 further comprising:
providing a different product key to each consumer.

33. The method of claim 30 wherein each version of the software application has distinct runtime behaviors and distinct installation characteristics.

34. The method of claim 30 further comprising:
providing a first consumer with a product key associated with a first version of the software application;

35. The method of claim 32 further comprising:
packaging the storage media in packaging material having markings that indicate that the storage media in the packaging material contains only a first version of the software application; and
providing a different first product key with the packaging material of each storage medium, each first product key associated with the first version indicated on the packaging.

36. The method of claim 30, wherein the providing operation further comprises:
storing the installer on the storage media with the computer code.

37. The method of claim 33, wherein the providing operation further comprises:
providing a lookup table that identifies each version as a distinct set of installation and runtime behaviors of the software application and identifies each version with its associated product key.

38. The method of claim 37, wherein the lookup table identifies distinct text to be displayed by each version of the software application during runtime.

39. The method of claim 37, wherein the lookup table identifies distinct end user license agreements that dictate the rights of the end user of each version of the software application.

40. The method of claim 37, wherein the lookup table identifies distinct installation procedures to be followed during installation of each version of the software application.

41. The method of claim 30, wherein the plurality of storage media are already part of a consumers' computing devices and the distributing comprising:
transmitting identical copies of computer code necessary to install any of the plurality of versions of the software application including the first version to each consumer over a network for storage on the consumers' storage media.

42. A computer-readable medium comprising:
computer code necessary to install any of a plurality of versions of a software application including at least a first portion of computer code that is necessary to install all of the plurality of versions of the software application and a plurality of second portions, each second portion necessary to install a distinct one of the plurality of versions of the software application; and
an installer that, when executed by a computer, requests a product key and installs one of the versions of the software application based on the product key given in response to the request.

43. The computer readable medium of claim 42 further comprising:
a file containing at least one lookup table that associates each version with one or more product keys.

44. The computer readable medium of claim 43, wherein the at least one lookup table identifies each version of the software application as a distinct set of behaviors of the software application.

45. The computer readable medium of claim 44, wherein the at least one lookup table comprises:
a SKU table that associates each product key with a brand in a branding table and a map in a mapping table;
the mapping table that associates each map with an end-user license agreement (EULA) identifier;
the branding table that associates each brand with distinct text to be used during installation or runtime of the software product; and
a EULA table associating each EULA identifier with a EULA.

46. The computer readable medium of claim 42 packaged with a product key associated with one of the plurality of versions of the software application.

47. The computer readable medium of claim 42 packaged in packaging indicating that only a first version of the software application is contained on the computer readable medium.

48. The computer readable medium of claim 47 wherein the packaging includes a product key specific to the first version of the software application.

49. A computer program product readable by a computing system and encoding a computer program of instructions for executing a computer process for installing a first version of a software application on a computer, said computer process comprising:
receiving a command from a user to install software on the computer; accessing at least one data storage disc having computer code necessary for installing a plurality of versions of the software application on the computer including the first version, the computer code including a primary portion that is used during the operation of each of the plurality of versions after installation on the computer and a plurality of different version-specific portions, each version-specific portion associated with a different version of the software application and used during the operation of only its associated different version;
requesting a product key;
receiving the product key, the product key identifying the first version; and
installing the primary portion of computer code and only the version-specific portion of computer code associated with the first version.

50. The computer program product of claim 49, wherein the at least one data storage disc includes a plurality of data storage discs and wherein accessing further comprises:
accessing at least two of the plurality of data storage discs.

51. The computer program product of claim 49, wherein each version is distinct from the other versions and has distinct runtime behaviors, distinct installation behaviors, or both.

52. The computer program product of claim 49 wherein receiving comprises:
receiving a command to execute an installer stored on the at least one data storage disc; and
executing the installer.

53. The computer program product of claim 49, wherein installing comprises:
after input of the product key;
decrypting the product key; and
extracting information from the decrypted product key that identifies the first version.

54. The computer program product of claim 49 said computer process further comprising:
providing at least one lookup table in a file on the at least one data storage disc, the look up table identifying each product key with one of the plurality of versions on the at least one data storage disc.

55. The computer program product of claim 49, wherein installing comprises:
validating a digital signature contained in the product key; and
installing the first version only if the digital signature can be validated.

56. The computer program product of claim 49, wherein installing comprises:
copying only the computer code necessary to install the first version from the at least one storage medium to the computer.

57. The computer program product of claim 49, wherein installing comprises:
writing data to a registry maintained on the computer, the data specific to the first version.

58. A method for installing a first version of a software application on a computer comprising:
receiving a command from a user to install software on the computer;
accessing at least one data storage disc having computer code necessary for installing a plurality of versions of the software application on the computer including the first version, the computer code including a primary portion that is used during the operation of each of the plurality of versions after installation on the computer and a SKU file containing encoded licenses and behavior information for the plurality of versions;
requesting a product key;
receiving the product key, the product key identifying a first version; and
installing the primary portion of computer code and the SKU file.

59. The method of claim 58, wherein installing comprises:
enabling behaviors for the first version of the software product based on the behavior information in the SKU file.

60. The method of claim 58, wherein installing comprises:
decoding a first license for the first version of the software product from the SKU file to create a decoded license;
copying the decoded license for the first version of the software product to a license store on the computer.

61. The method of claim 59, wherein enabling comprises:
enabling installation behaviors for the first version of the software product based on the behavior information in the SKU file.

62. The method of claim 59, wherein enabling comprises:
enabling branding text for the first version to be displayed during runtime, the branding text stored in the SKU file.

63. The method of claim 58, wherein the at least one data storage disc includes a plurality of data storage discs and wherein accessing further comprises:
accessing at least two of the plurality of data storage discs.

64. The method of claim 58, wherein each version is distinct from the other versions and has distinct runtime behaviors or distinct installation behaviors, or both.

65. The method of claim 58, wherein receiving comprises:
receiving a command to execute an installer stored on the at least one data storage disc; and
executing the installer.

66. The method of claim 58, wherein installing comprises:
after input of the product key;
decrypting the product key; and
extracting information from the decrypted product key that identifies the first version.

67. The method of claim 58 further comprising:
providing at least one lookup table in the SKU file on the at least one data storage disc, the look up table identifying each product key with one of the plurality of versions on the at least one data storage disc.

68. The method of claim 58, wherein installing comprises:
validating a digital signature contained in the product key; and
installing the first version only if the digital signature can be validated.

69. The method of claim 58, wherein installing comprises:
copying only the computer code from the SKU file necessary to install the first version from the at least one storage medium to the computer.

70. The method of claim 58, wherein installing comprises:
writing data from the SKU file to a registry maintained on the computer, the data specific to the first version.
